(19) Europäisches Patentamt
European Patent Office
Office européen des brevets

(11) **EP 4 332 021 A1**

(12) **EUROPEAN PATENT APPLICATION**
published in accordance with Art. 153(4) EPC

(43) Date of publication:
**06.03.2024 Bulletin 2024/10**

(21) Application number: **21939327.9**

(22) Date of filing: **30.04.2021**

(51) International Patent Classification (IPC):
**B65D 85/808** (2006.01)     **A47J 31/18** (2006.01)
**B65D 77/00** (2006.01)

(52) Cooperative Patent Classification (CPC):
**A47J 31/18; B65D 77/00; B65D 85/808**

(86) International application number:
**PCT/JP2021/017185**

(87) International publication number:
**WO 2022/230169 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ohki Co., Ltd.**
**Chuo-ku**
**Osaka-shi**
**Osaka 541-0058 (JP)**

(72) Inventors:
• **MURAOKA, Shinya**
  **Osaka-shi, Osaka 541-0058 (JP)**
• **HAYAMI, Ryosuke**
  **Osaka-shi, Osaka 541-0058 (JP)**

(74) Representative: **TBK**
**Bavariaring 4-6**
**80336 München (DE)**

(54) **EXTRACTION BAG**

(57)     Provided is a dip-type extraction bag 1A having a bag main body in a planar shape such as a flat bag, the bag main body being formed of a water-permeable filter sheet and filled with an extraction material, wherein the extraction efficiency is improved by providing the bag main body with a specific gripping portion that is formed from a thin plate-like material and by regulating the characteristics of the water-permeable filter sheet. The extraction bag 1A includes a bag main body 3 that is formed of a water-permeable filter sheet, a thin plate-like member 10 that is provided on an outer surface of the bag main body 3, and an extraction material that is sealed in the bag main body 3, the extraction material being subjected to extraction while sealed in the bag main body 3. The bag main body 3 is a flat bag that has two facing surfaces. The thin plate-like member 10 has a gripping portion 11 that protrudes or is able to protrude from an upper side 3a of the bag main body 3 or the outer surface 3x, 3y of the bag main body 3. The bending resistance (41.5° cantilever method in JIS L 1913:2010 (ISO method)) of the water-permeable filter sheet is 0.09 to 6.0 mN·cm.

**FIG. 2**

EP 4 332 021 A1

**Description**

Technical Field

The present invention relates to a drip-type extraction bag.

Background Art

Conventionally, tea bags are widely used for easy preparation of beverages, such as green tea, black tea, and oolong tea. The tea bags each have a bag main body that is formed of a water-permeable filter sheet and filled with tea leaves of these beverages, and the bag main body has a hanging thread attached thereto. In the case of coffee, drip-type extraction bags are widely used. The extraction bags each have a bag main body that is formed of a water-permeable filter sheet and filled with coffee powder, and the bag main body is opened at the time of extraction to allow hot water to be poured through an upper surface opening. Dip-type extraction bags that are dipped in hot water without involving opening of the bag main body that is filled with coffee powder are also known.

However, even when an attempt is made to dip such a dip-type coffee extraction bag into hot water, the bag main body itself, which is filled with coffee powder, tends to float up in the hot water because the coffee powder contains carbon dioxide, which makes it difficult to sufficiently extract coffee. Accordingly, it has been proposed that a hook piece formed of a thin plate-like material is attached to one surface of a bag main body that is a flat bag and a support piece is formed in the hook piece so that the hook piece is allowed to be hooked onto a cup to prevent the bag main body filled with coffee powder from floating up in hot water (Patent Document 1).

In the case of the dip-type extraction bags, the volume of the bag main body dipped in hot water is preferably large for performing sufficient extraction. However, it is difficult to secure a large volume in hot water when the bag main body is in a planar shape, such as a flat bag. Accordingly, it has been proposed that a heat-shrinking and deforming member is incorporated into a bag main body to increase the volume of the bag main body in hot water (Patent Document 2). In this case, while the softness of a sheet-like object that forms the bag main body is not limited, polyester spunbond (basis weight is 30g/m$^2$, and bending resistance by bending resistance method A (45° cantilever method) in JIS L 1096 is 65 mm) is used in an example.

On the other hand, in order to impart tactile softness, shape retainability, or the like, to the bag main body that is formed of polyester-based fiber, it has been proposed to form the bag main body from a filter material having a bending resistance such that a movement distance of a test piece, measured by the bending resistance method A (45° cantilever method) in JIS L 1096, is 35 to 45% of the length of the test piece (Patent Literature 3). According to this example, the bag main body in a tetrahedral shape had good shape retainability before and after extraction.

Citation List

Patent Literature

Patent Literature 1: Japanese Utility Model Registration No. 3140084
Patent Literature 2: Japanese Patent Application Laid-Open No. Sho. 62-220461
Patent Literature 3: Japanese Patent Application Laid-Open No. 2000-118561

Summary of Invention

Technical Problem

According to the extraction bag disclosed in Patent Literature 1, it becomes possible to hook the hook piece onto a cup so that the bag main body is dipped in hot water. However, extraction efficiency is still low by simply hooking the hook piece onto the cup, and it is difficult to obtain extract liquid of a desired concentration in a short time, especially because the bag main body is a flat bag. Specifically, the cost of manufacturing the extraction bag can be reduced when the bag main body is shaped into a flat bag, but the extraction efficiency of the flat bag is still low because the space where an extraction material can move in the bag main body is narrower than when the extraction bag is in a three-dimensional shape such as a tetrahedron shape.

On the other hand, providing a heat-shrinking and deforming member as disclosed in Patent Literature 2 complicates the manufacturing process of the extraction bag and increases the manufacturing cost.

Accordingly, an object of the present invention is to improve extraction efficiency in a dip-type extraction bag having a bag main body in a planar shape such as a flat bag, the bag main body being formed of a water-permeable filter sheet and filled with an extraction material. Here, the extraction efficiency is improved by providing the bag main body with a specific gripping portion that is formed from a thin plate-like material and by regulating the characteristics of the water-permeable filter sheet.

In Patent Literature 3, it is proposed to use, as a filter material to form a bag main body, a material having bending resistance in a specific range as measured by the bending resistance method A (45° cantilever method) in JIS L 1096. However, examination is made only on the ratio of the movement distance of a test piece to the length of the test piece, measured by the 45° cantilever method, for flat textiles in the context of improving tactile softness or the ability of the bag main body to retain a three-dimensional shape such as a tetrahedral shape. Furthermore, no examination is made on the bending resistance of the filter material in the context of increasing extraction efficiency in a bag main body in a planar shape such as a flat bag. Specifically, the characteristics of a filter material suitable for securing the volume of the bag main body in hot water are considered to be different between first, the case where the shape of the bag main body before being filled with an extraction material is a planar shape such as a flat bag, and second, the case where the shape is a three-dimensional shape such as a tetrahedral shape. However, in Patent Literature 3, examination is not made on the relationship between the characteristics of the filter material and the extraction efficiency in the case where the shape of the bag main body is a planar shape such as a flat bag.

Solution To Problem

The present inventor has found that the extraction efficiency is improved by using an extraction bag including a bag main body that is formed of a water-permeable filter sheet, a thin plate-like member that is provided on an outer surface of the bag main body, and an extraction material that is sealed in the bag main body, the extraction material being subjected to extraction while sealed in the bag main body, wherein the bag main body is moved up and down with respect to a hot water surface to allow extraction when the bag main body is a flat bag with two facing surfaces, a gripping portion that allows expansion of an internal space of the bag main body is preferably formed from a thin plate-like member, and a sheet with a specific bending resistance is used as the water-permeable filter sheet. The present invention thus has been completed.

Specifically, the present invention provides an extraction bag including a bag main body that is formed of a water-permeable filter sheet, a thin plate-like member that is provided on an outer surface of the bag main body, and an extraction material that is sealed in the bag main body, the extraction material being subjected to extraction while sealed in the bag main body, wherein:

the bag main body is a flat bag that has two facing surfaces;
the thin plate-like member has a gripping portion that protrudes or is able to protrude from an upper side of the bag main body or the outer surface of the bag main body; and
the bending resistance (41.5° cantilever method in JIS L 1913:2010 (ISO method)) of the water-permeable filter sheet is 0.09 to 6.0 mN·cm.

Advantageous Effects of Invention

According to the extraction bag of the present invention, since the gripping portion that protrudes or is able to protrude from the upper side of the bag main body or the outer surface of the bag main body can be gripped, it is possible to promote extraction by gripping the gripping portion and moving the bag main body up and down with respect to water or hot water, even when the bag main body tends to float up in water or hot water depending on the type of the extraction material. Particularly in the case where the bulk of the extraction material is low and the two facing surfaces of the bag main body are close to each other despite the extraction material being sealed in the bag main body, if no specific gripping portion is provided on the bag main body, the internal space of the bag main body remains small and a little water or hot water flows into the bag main body during extraction. However, the extraction efficiency can be improved according to the aspect in which a specific gripping portion is provided to increase the internal space of the bag main body while the gripping portion is made to protrude from the upper side of the bag main body.

In addition, according to the extraction bag of the present invention, the water-permeable filter sheet that forms the bag main body has a bending resistance in a specific range, as measured by the 41.5° cantilever method (ISO method) in JIS L 1913:2010, so that the extraction efficiency is improved and the extract liquid of a desired concentration can be obtained in a shorter time.

In addition, since the bag main body used in the extraction bags of the present invention is a flat bag, the bag main body can be manufactured at low cost on an industrial production line.

Brief Description of Drawings

Fig. 1A is a plan view of an extraction bag 1A of an embodiment.
Fig. 1B is a rear view of the extraction bag 1A of the embodiment.
Fig. 2 is a perspective view showing extraction with the extraction bag 1A of the embodiment.
Fig. 3A is a cross-sectional view of the extraction bag when the bending resistance of a water-permeable filter sheet is low.
Fig. 3B is a cross-sectional view of the extraction bag when the bending resistance of the water-permeable filter sheet is high.
Fig. 4A is a cross-sectional view of the extraction bag 1A of the embodiment when dipped in hot water.
Fig. 4B is a cross-sectional view of an extraction bag after dipped in hot water and then lifted from the hot water, the extraction bag having an extremely low bending resistance of the water-permeable filter sheet.
Fig. 5 is a plan view of an extraction bag manufacturing sheet.
Fig. 6 is an explanatory view of a manufacturing method of an extraction bag.
Fig. 7A is a plan view of an extraction bag 1B of the embodiment.
Fig. 7B is a plan view of the extraction bag 1B of the embodiment, with a gripping portion being folded.
Fig. 8A is a plan view of an extraction bag 1C of the embodiment.
Fig. 8B is a rear view of the extraction bag 1C of the embodiment.
Fig. 9A is a perspective view of the extraction bag 1C of the embodiment, with the gripping portion being pulled out.
Fig. 9B is a perspective view of the extraction bag 1C of the embodiment in the state of being subjected to extraction.
Fig. 10A is a plan view of an extraction bag 1D of the embodiment.
Fig. 10B is a rear view of the extraction bag 1D of the embodiment.
Fig. 11 is a perspective view of the extraction bag 1D of the embodiment, with the gripping portion being pulled out.
Fig. 12A is a plan view of an extraction bag 1E of the embodiment.
Fig. 12B is a rear view of the extraction bag 1E of the embodiment.
Fig. 13 is a development view of the extraction bag 1E of the embodiment.
Fig. 14A is a perspective view of the extraction bag 1E of the embodiment, with the gripping portion being pulled out.
Fig. 14B is a perspective view of the extraction bag 1E of the embodiment, with the gripping portion being pulled out.
Fig. 15A is a plan view of an extraction bag 1F of the embodiment.
Fig. 15B is a rear view of the extraction bag 1F of the embodiment.
Fig. 16 is a perspective view of the extraction bag 1F of the embodiment, with the gripping portion being pulled out.
Fig. 17 is a plan view of an extraction bag 1G of the embodiment.
Fig. 18 is a perspective view of the extraction bag 1G of the embodiment in the state of being subjected to extraction.
Fig. 19 shows evaluation criteria for the concentration of extract liquid from black tea extraction bags.
Fig. 20A shows the relationship between the bending resistance and evaluation values of concentration of extract liquid in the black tea extraction bags.
Fig. 20B is an enlarged view of the relationship shown in Fig. 20A in the case where the bending resistance is equal to or less than 0.6 mN·cm.
Fig. 21 shows evaluation criteria for the concentration of extract liquid in coffee extraction bags.
Fig. 22A shows the relationship between the bending resistance and evaluation values of concentration of extract liquid in the coffee extraction bags.
Fig. 22B is an enlarged view of the relationship shown in Fig. 22A, in the case where the bending resistance is equal to or less than 0.6 mN·cm.

Description Of Embodiments

Hereinafter, the present invention will be described in detail with reference to the drawings. Note that in each drawing, an identical sign represents an identical or equivalent component member.

(Overall Configuration)

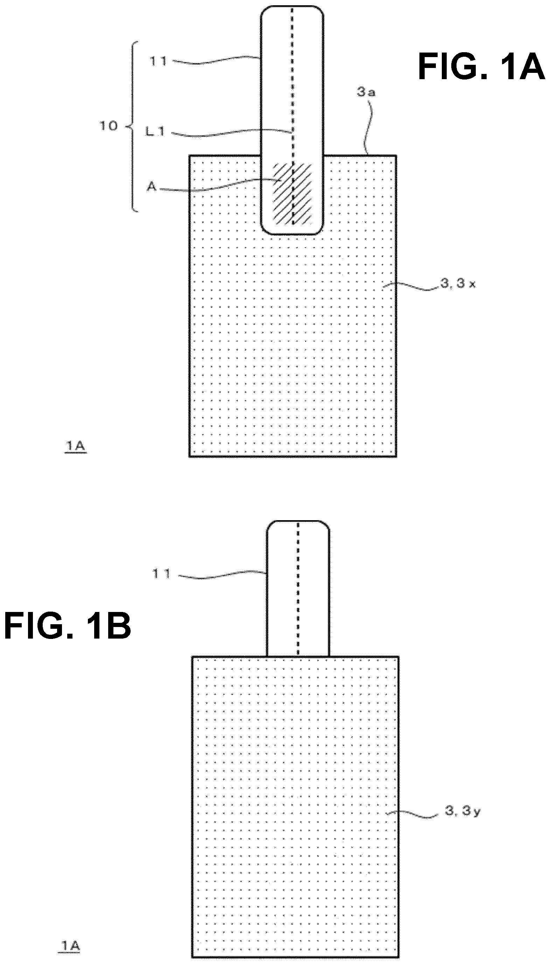

Fig. 1A is a plan view of the extraction bag 1A of an embodiment of the present invention as viewed from the side of a thin plate-like member, and Fig. 1B is a rear view thereof. In Fig. 1A, an area filled in with diagonal lines represents a bonding region A between a thin plate-like member 10 and a bag main body 3, and a region filled in with dots represents the surface of the bag main body 3. In the present invention, the bonding region A is not limited to the illustrated aspect.

The extraction bag 1A includes the bag main body 3 that is formed of a water-permeable filter sheet, the thin plate-like member 10 that is provided on an outer surface of the bag main body 3, and an extraction material that is sealed in the bag main body 3, the extraction material being subjected to extraction while sealed in the bag main body 3. Here, hot water is usually used as an extraction medium, and extraction may be performed with water or lukewarm water.

In the present invention, the bag main body is a flat bag having two facing surfaces, and the bag main body 3 in the present embodiment is a flat bag. Here, the flat bag refers to a bag having a bag main body that is flat or folded into a flat shape when placed on a flat surface in a state of not being filled with an extraction material, and preferably refers to a bag having a bag main body with its upper end formed of one upper side. The shape of the bag main body in plan view is not particularly limited and may be rectangular, circular, or other shapes. The bag main body may also have a gusset on its side surfaces or bottom surface, the gusset being formed by folding. In this regard, bags in three-dimensional shapes, such as tetrahedral, cubic, and spherical shapes, are not included in the bag main body of the present invention.

In the present invention, the thin plate-like member 10 has a gripping portion 11 that protrudes or is able to protrude from an upper side 3a of the bag main body 3 or an outer surface 3x of the bag main body 3. In order to provide the thin plate-like member 10 with the gripping portion 11, a cut line or a folding line is provided on the thin plate-like member 10 as necessary.

Note that there are extraction bags having a bag main body opened at its upper part and including a hooking portion formed from a thin plate-like material on outer surfaces of two surfaces facing each other of the bag main body, so that when the hooking portion is hooked onto a cup, the outer surfaces of the bag main body are pulled in directions away from each other and an opening portion on the upper part of the bag main body is widened, and thereby the volume of the bag main body is also increased. Such bags are unable to obtain the advantageous effects of preventing excessive reduction in volume of the bag main body and improving extraction efficiency by limitation of the bending resistance.

The extraction bag 1A in the present embodiment has a strip-shaped gripping portion 11 provided so as to protrude upward from the upper side 3a of the bag main body 3. The gripping portion 11 is fixed to the bag main body 3 by its one end portion in a long-side direction being bonded to one outer surface 3x of the bag main body 3 at the region A. In addition, a folding line L1 extends from a protruding end of the gripping portion 11 to the end portion bonded to the bag main body. The folding line L1 may be formed by perforation, half-cut, creasing, etc.

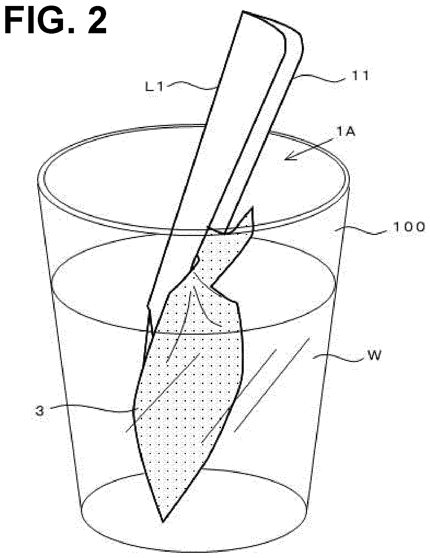

The gripping portion 11 becomes rigid when the gripping portion 11 is folded into two at the folding line L1. Therefore, as shown in Fig. 2, pushing and sinking the bag main body 3 into hot water W at the time of extraction can be done with ease. Thus, promoting extraction can be done with ease by sinking or lifting the bag main body 3 that is filled with any extraction material into or from the hot water W. Since the folding line L1 is formed from the protruding end of the gripping portion 11 to the bonding region A between the gripping portion 11 and the bag main body 3, the upper part of the bag main body 3 is partially bent by folding the gripping portion 11 in two at the folding line L1, and thereby the internal space of the bag main body, which is initially flat, increases. Therefore, the amount of hot water flowing into the bag main body increases and the extraction efficiency improves.

Here, the thin plate-like member is not provided on the other outer surface 3y of the bag main body 3 (Fig. 1B).

(Extraction Material)

Examples of the extraction materials to be filled into the bag main body 3 include coffee powder, leaves of teas such as black tea and green tea, and herbal medicine. In normal circumstances, when coffee powder is filled into the bag main body 3, and an attempt is made to dip the bag main body 3 into hot water, carbon dioxide contained in the coffee powder tends to cause the bag main body to float up, which makes extraction difficult. However, according to the extraction bag 1A of the present embodiment, holding the gripping portion 11 folded into two at the folding line L1 as described above makes it easy to sink the bag main body 3 into hot water or to move the bag main body 3 up and down in the hot water. Therefore, various extraction materials including coffee powder are suitable as extraction materials to be extracted in the extraction bag 1A.

(Water-Permeable Filter Sheet)

In the present invention, the bending resistance of the water-permeable filter sheet that forms the bag main body 3, by the 41.5° cantilever method (ISO method) in JIS L 1913:2010 described below, is 0.09 to 6.0 mN·cm, and preferably 0.1 to 2.5 mN·cm. This bending resistance makes performing efficient extraction possible. Here, the bending resistance is calculated by the following equation (1).

[Equation 1]

$$\text{Bending resistance } [\text{mN·cm}] = m \times C^3 \times 10^{-3} \quad (1)$$

In the equation 1, m is a basis weight of a test piece, that is, a mass per unit area [g/m$^2$].

C is a bending length (cm). The bending length C is half the length (protruding length) of the test piece that protrudes from a horizontal surface and is measured by a cantilever tester with an inclination of 41.5°. This equation 1 rounds gravitational acceleration to 10 m/sec$^2$.

In the 45° cantilever method used in Patent Literature 2 and Patent Literature 3, the angle of an inclined surface of the cantilever tester is 45°, and the length (mm) of the test piece protruding from the horizontal plane is defined as bending resistance.

In general, the bending resistance of a nonwoven fabric in a flow direction (MD direction) in the manufacturing process is larger than the bending resistance in the direction (CD direction) orthogonal to the flow direction. In the case where the bending resistance of the water-permeable filter sheet used in the present invention is different between in the MD direction and the CD direction, the higher bending resistance of the water-permeable filter sheet in the MD or CD direction satisfies the provision of the present invention previously described.

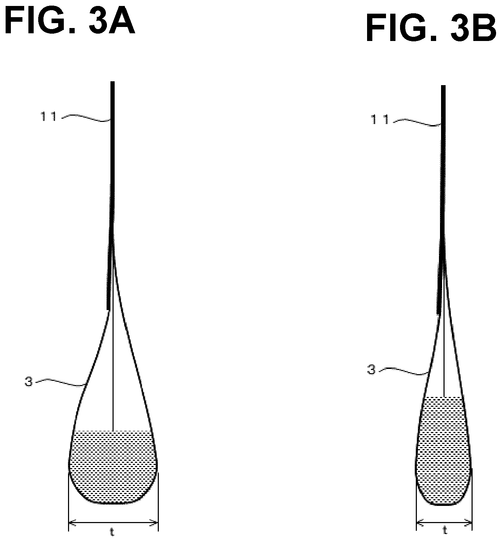

When comparing two bag main bodies that are both filled with an extraction material but are different in terms of the bending resistance of the water-permeable filter sheet that forms the bag main bodies, the bag main body having a low bending resistance becomes thicker in thickness t of the bag main body 3, and larger in volume inside the bag main body 3, and receives more hot water that flows into the bag main body 3 at the time of extraction as shown in Fig. 3A. On the other hand, as shown in Fig. 3B, the bag main body having a higher bending resistance becomes thinner in thickness t of the bag main body 3, and smaller in volume inside the bag main body 3, and receives less hot water that flows inside the bag main body 3 at the time of extraction than the bag main body having a low bending resistance, and thus the extraction efficiency tends to decrease. Therefore, when the bending resistance is excessively high, the concentration of extract liquid obtained by a prescribed extraction operation is lowered as will be described in examples which will be described later.

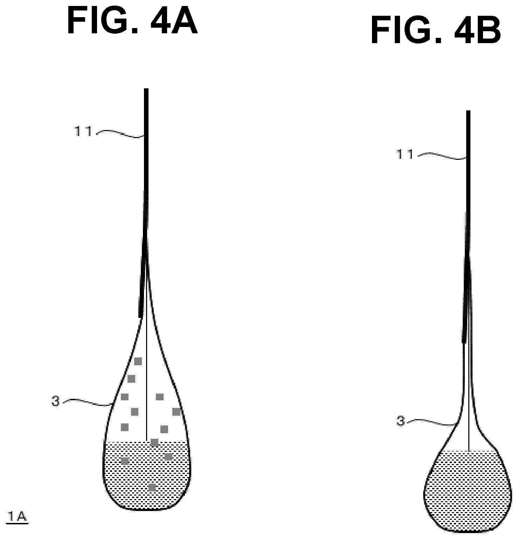

On the other hand, in the case of the water-permeable filter sheet having an excessively low bending resistance, when the bag main body 3 filled with an extraction material is once sunk in hot water and then lifted, the water-permeable filter sheet clings to the extraction material as shown in Fig. 4B, or the front and rear water-permeable filter sheets of the bag main body 3 stick to each other. As a result, the volume of the bag main body 3 decreases, and this state remains even when the bag main body 3 is sunk in the hot water again, causing a problem of reduced movement of the extraction material in the bag main body. In the case where the bending resistance is excessively low, the bag main body becomes less compatible with a filling-packaging machine that is used for industrial production of the extraction bags.

In contrast, when the water-permeable filter sheet has a proper bending resistance, the extraction material moves as if flying up in the bag main body 3 when the bag main body 3 is sunk in hot water as shown in Fig. 4A, and extraction is promoted.

The aforementioned problem caused by the low bending resistance may be mitigated by using the rigidity of the thin plate-like members. For example, when the bending resistance of the water-permeable filter sheet is different between in the MD direction and the CD direction, stretching the bonding region A between the thin plate-like member and the bag main body in the CD direction can reduce, by using rigidity of the thin plate-like member, the problem caused by the bending resistance in the CD direction being lower than that in the MD direction.

As shown in the aforementioned equation (1), the bending resistance depends on the basis weight of the water-permeable filter sheet. The preferable basis weight is determined according to the type of water-permeable filter sheet, the type of fiber, etc., though the preferable basis weight is typically 7 to 30 g/m$^2$.

Specifically, various materials that have permeation and filtration properties and that can be used for extraction of an extraction material can be used as the water-permeable filter sheet. Examples of known water-permeable filter sheets used for extracting beverages include: synthetic fibers such as polyester, nylon, polyethylene, polypropylene, and vinylon; semi-synthetic fibers such as rayon; woven or nonwoven fabrics made of a single natural fiber or composite natural fibers such as kouzo (paper mulberry), and mitsumata (paper bush); mixed paper made from Manila hemp, wood pulp, polypropylene fiber, or the like; and papers such as tea bag base paper. These materials can also be used in the present invention. Taking into account the discardability of the extraction bags after use, the water-permeable filter sheet preferably contains biodegradable fiber. Examples of the biodegradable fiber include a polylactic acid, a polybutylene succinate, and a polyethylene succinate. In addition, in the interest of imparting transparency to the water-permeable filter sheet to allow visual confirmation regarding the condition of the extraction material in the bag main body, it is preferable to reduce the content of inorganic pigments or to not contain inorganic pigments at all.

As the water-permeable filter sheet, a nonwoven fabric can reduce the basis weight with uniform density since a nonwoven fabric can be made from the fiber diameter smaller than a woven fabric, such as plain woven fabric. Therefore, the nonwoven fabric is preferable in terms of reducing basis weight and obtaining a sheet with a low bending resistance without causing leakage of extraction material powder. For the extraction materials having powder leakage issues, such as coffee powder, the nonwoven fabric is particularly preferable. When the nonwoven fabric is used as the water-permeable filter sheet, a spunbond nonwoven fabric, a melt-blown nonwoven fabric, or a laminate of these can be preferably used. In the case of obtaining a nonwoven fabric with low bending resistance in particular, a polypropylene melt-blown nonwoven fabric is preferable, taking into account that a nonwoven fabric with a small fiber diameter and a light basis weight is easily obtained. In the case of obtaining a nonwoven fabric with a large bending resistance, a polyethylene terephthalate spunbond nonwoven fabric is preferable. The amount of lamination of the spunbond nonwoven fabric and the melt-blown nonwoven fabric can be adjusted appropriately so as to set the bending resistance of the nonwoven fabric to a desired value.

In the drip-type extraction bag, hot water is directly poured to the extraction material, whereas in the extraction bag of the present invention, hot water is always supplied to the extraction material through the water-permeable filter sheet. Accordingly, a water-permeable filter sheet that is coarser than the water-permeable filter sheet used in the drip-type extraction bag is preferably used, the coarseness staying within a range where leakage of the extraction material powder does not occur. For example, when coffee powder is used as the extraction material, air permeability of the water-permeable filter sheet may be set to 130 to 600 $cm^3/cm^2/sec$ (JIS L 1096 air permeability method A (a method using a Frazier type air permeability tester)).

(Thin Plate-Like Member)

The thin plate-like member 10 preferably has water-repellent properties, and can be formed by punching a thin plate-like material, such as a paperboard with a resin laminated on the surface thereof or a plastic sheet. Taking into account the discardability of the extraction bag 1A after use, the thin plate-like member 10 is preferably formed from biodegradable materials, such as a polylactic acid, a polybutylene succinate, and a polyethylene succinate.

(Using Method)

A method of using the extraction bag 1A of the embodiment includes, as shown in Fig. 2, the steps of folding the gripping portion 11 in two at the folding line L1, putting the bag main body 3 in a container such as a cup 100, pouring hot water, gripping the half-folded gripping portion 11, pushing the bag main body 3 into hot water W if necessary, and dipping the bag main body 3 into the hot water. When the bag main body 3 in the hot water W is moved up and down by moving the gripping portion 11 up and down, the hot water W repeatedly flows into the bag main body 3 and flows out of the bag main body 3, promoting extraction. Alternatively, the extraction bag 1A is put in the cup 100 that is filled in advance with hot water, and then the extraction bag 1A is moved up and down in the same way for extraction.

Moreover, while the bag main body 3 is dipped in the hot water W, the gripping portion 11 may be released from a hand-supported state, and the extraction bag 1A may be left unattended, with the gripping portion 11 being supported by an inner wall of the cup 100. The extraction may proceed while the extraction bag 1A is left unattended. In this case, the bag main body 3 may be moved up and down in the hot water again by gripping and moving up and down the gripping portion 11 to promote the extraction.

Furthermore, according to the present invention, when the extract liquid is obtained from the extraction bag 1A in this way, the bending resistance of the water-permeable filter sheet is within a specific range, so that the extract liquid of a desired concentration can be obtained in a shorter time.

Note that the extraction bag 1A can be easily removed from the cup 100 by gripping the gripping portion 11.

(Manufacturing Method)

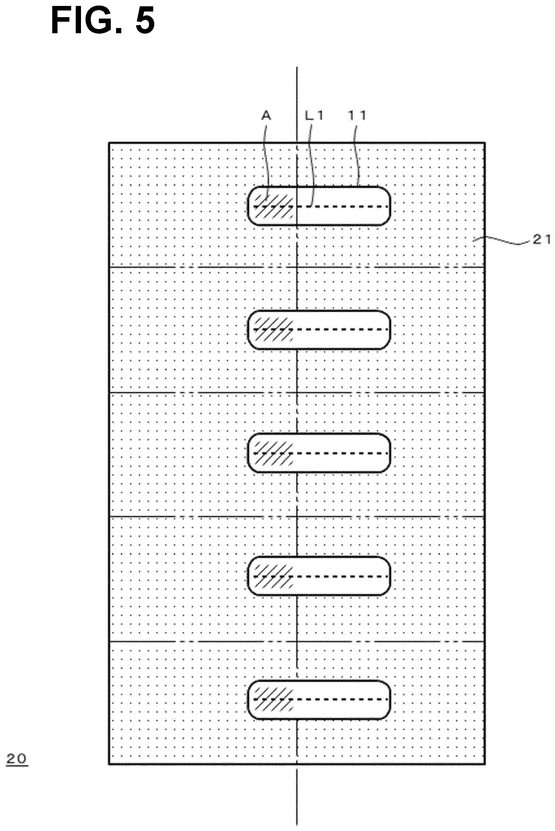

The extraction bag 1A can be manufactured in accordance with publicly known manufacturing methods of an extraction bag. For example, as shown in Fig. 5, an extraction bag manufacturing sheet 20 is prepared by arranging the gripping portions 11 on a water-permeable filter sheet 21 at prescribed intervals with the long-side direction of the gripping portion 11 being aligned with a short-length direction of the long water-permeable filter sheet 21, and by bonding the gripping portions 11 to the water-permeable filter sheet 21 at each of the regions A. In Fig. 5, one block separated by two-dot chain lines corresponds to one extraction bag 1A.

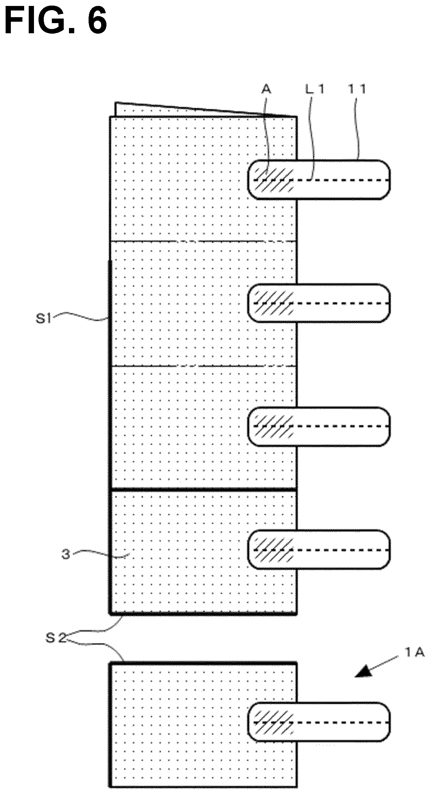

The extraction bags 1A can be continuously manufactured by using the extraction bag manufacturing sheet 20 in a filling-packaging machine. In this case, as shown in Fig. 6, both the sides of the extraction bag manufacturing sheet 20 in the long-side direction are folded into two so as to overlap each other, and the sides in the long-side direction are welded together to form a longitudinal seal S1, by which a cylindrical body is formed. Next, forming a transverse seal S2 that welds the cylindrical body in the short-side direction, and filling the extraction material into the bag main body are alternately repeated to manufacture an extraction bag continuous body, in which the extraction bags 1A are connected in an up-down direction on the sides of the bag main bodies 3, and the extraction bag continuous body is cut and separated into individual extraction bags to obtain the extraction bags 1A. Alternatively, at the time of forming the transverse seal of the cylindrical body in the short-side direction, melt-cutting may also be performed at the same time, so that the extraction bags 1A separated into individual bags can continuously be manufactured.

(Modifications)

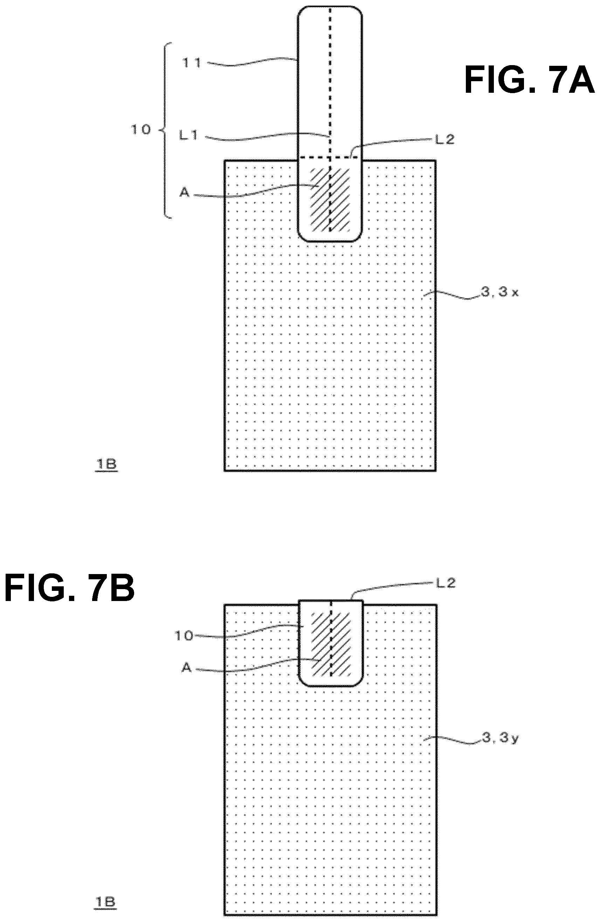

The extraction bag of the present invention can take various modifications in terms of the shape of the bag. For example, in order to make a distribution form of the extraction bags 1A, shown in Fig. 1A, more compact, the thin plate-like member 10 that forms the gripping portion 11 has a folding line L2 that is formed at a position approximately overlapped with the upper side 3a of the bag main body 3, as in the case of an extraction bag 1B shown in Fig. 7A, so that the thin plate-like member 10 can be folded at the folding line L2 as shown in Fig. 7B. When the extraction bags 1B are individually packaged while each of the thin plate-like members 10 is folded at the folding line L2, the individual packaging of the extraction bags 1B can be made compact.

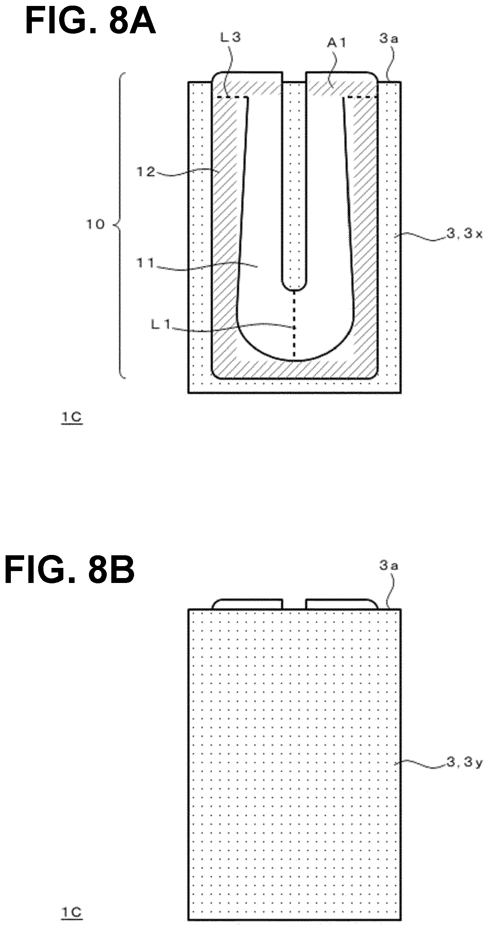

As in the case of an extraction bag 1C shown in Figs. 8A and 8B, the gripping portion 11 may be made to extend downward from a bonding region A1 between an upper end part of the bag main body 3 and the thin plate-like member 10. The gripping portion 11 also has the folding line L1 extending in the up-down direction of the bag main body for folding the gripping portion 11 into two. When the gripping portion 11 is pulled up from the bag main body 3, and the gripping portion 11 is folded into two at the folding line L1, the internal space of the bag main body 3 is widened and the extraction efficiency is improved.

The gripping portion 11 may be in a U-shape as shown in the drawing, or may be in other shapes, such as a V-shape, and a rectangular shape.

In the present invention, the thin plate-like member 10 may have a reinforcement portion 12 that is formed around the gripping portion 11 and bonded to the outer surface 3x of the bag main body 3. In the extraction bag 1C, the reinforcement portion 12 extends from the upper end part of the thin plate-like member 10, which is bonded to the upper end part of the bag main body 3, toward the lower part of the bag main body 3 along right and left sides of the bag main body 3, and right and left parts of the reinforcement portion 12 are connected on the lower part of the bag main body 3. In this way, the reinforcement portion 12 is made to extend from the upper side 3a to the lower part of the outer surface 3x of the bag main body, and therefore when the bag main body 3 is filled with an extraction material, such as coffee powder, that tends to cause the bag main body 3 to float up, it is easy to sink the bag main body 3 in hot water at the time of extraction.

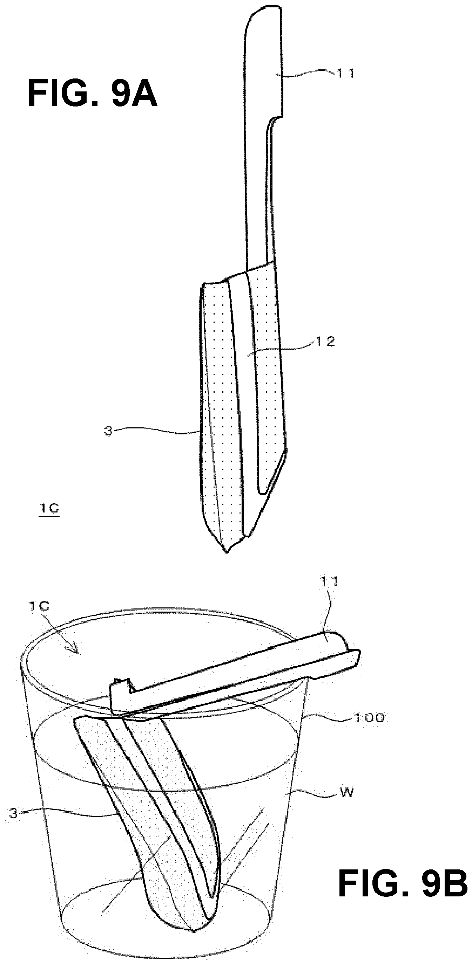

It is preferable to provide a folding line L3 between the bonding region A1 and the reinforcement portion 12 of the thin plate-like member 10 along the upper end part of the bag main body 3. This makes it easy to pull out the gripping portion 11 from the bag main body 3 as shown in Fig. 9A.

As shown in Fig. 9B, the extraction bag 1C may be subjected to extraction by hooking the gripping portion 11 that is pulled out from the bag main body 3 onto the cup 100 at the time of extraction.

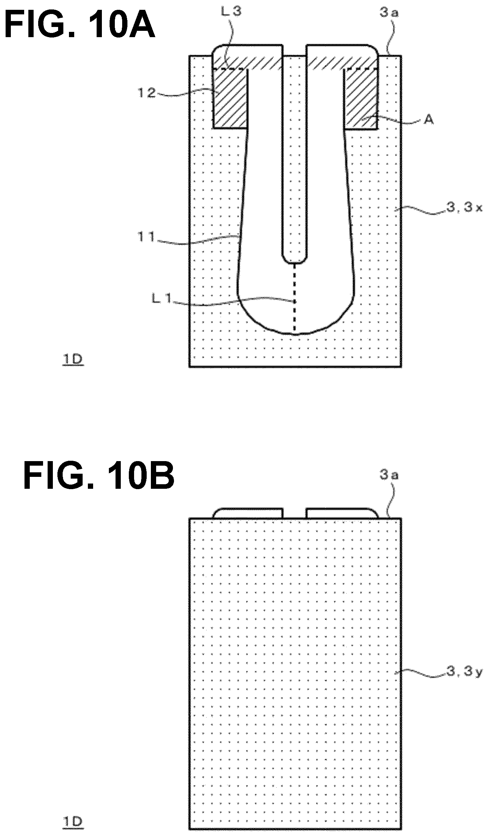

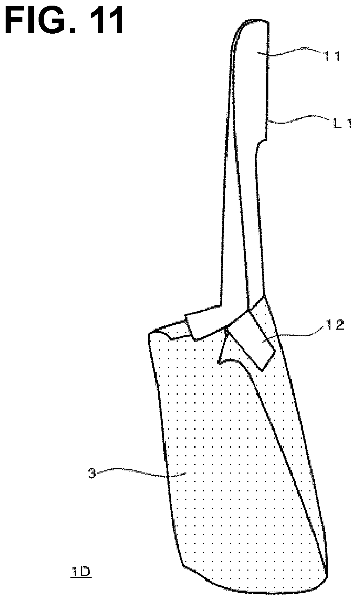

An extraction bag 1D shown in Figs 10A and 10B is based on the extraction bag 1C shown in Figs. 9A and 9B, with the reinforcement portions 12 being provided only on the upper part of the bag main body 3. Fig. 11 is a perspective view of the extraction bag 1D with the gripping portion 11 being pulled out from the bag main body 3. In the extraction bag 1C shown in Fig. 8A, the right and left parts of the reinforcement portion 12 of the gripping portion 11 are connected in the lower part of the gripping portion 11. In the present invention, when the reinforcement portion is provided, the length of the reinforcement portion can be determined appropriately as necessary.

When the bending resistance of the water-permeable filter sheet that forms the bag main body 3 is not excessively large, the reinforcement portions 12, when provided only on the upper part of the bag main body 3 as in the extraction bag 1D, allow the thickness of the bag main body 3 to be easily increased by the extraction material that is sealed in the bag main body 3, as compared with the reinforcement portion 12 that is made to extend from the upper part to the lower part of the bag main body 3. As a result, the internal space of the bag main body 3 is widened, and extraction is easily promoted.

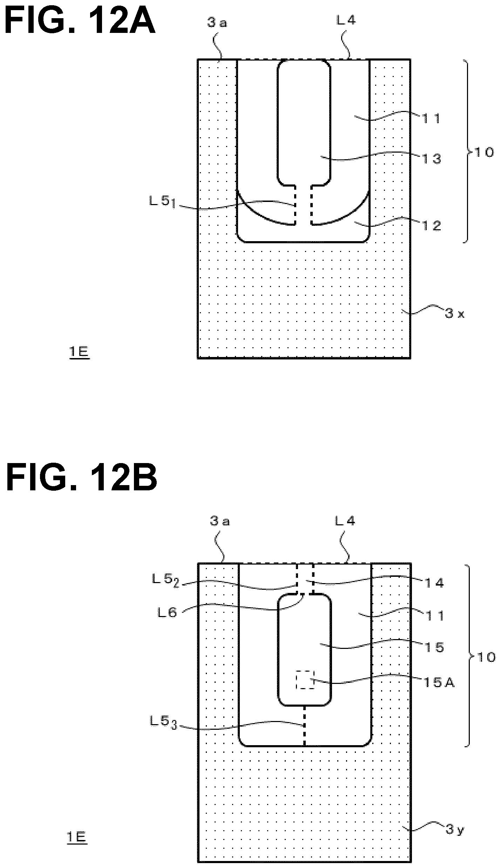

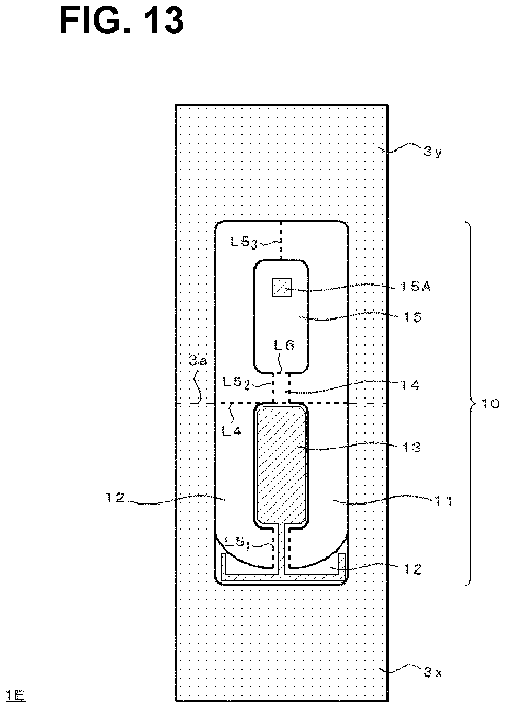

As in the case of an extraction bag 1E shown in Figs. 12A and 12B, the thin plate-like member 10 may be provided over one outer surface 3x and the other outer surface 3y of the bag main body 3. Fig. 13 is a development view of the extraction bag 1E. In the extraction bag 1E, a portion of the thin plate-like member 10 that is overlapped with the upper side 3a of the bag main body 3 is folded into two at a folding line L4. In the thin plate-like member 10, a portion located at the center part of one outer surface 3x of the bag main body 3 is used as a central bonded portion 13 that is bonded to the bag main body 3. On both the right and left sides of the central bonded portion 13, there is also a pair of long-length regions extending over both one outer surface and the other outer surface of the bag main body 3, as the gripping portion 11. To make it possible to pull up the gripping portion 11, which is constituted of the long-length regions, from the right and left sides of the bag main body, the thin plate-like member 10 has folding lines $L5_1$, $L5_2$, and $L5_3$ in the up-down direction of the bag main body. On the other outer surface 3y of the bag main body 3, a central upper end portion 14 that is not bonded to the bag main body 3 and a central pull-up portion 15 extending from the central upper end portion 14 through the folding line L6 are provided between the pair of long-length regions that form the gripping portion 11. The central pull-up portion 15 has a portion 15A that is bonded to the bag main body 3.

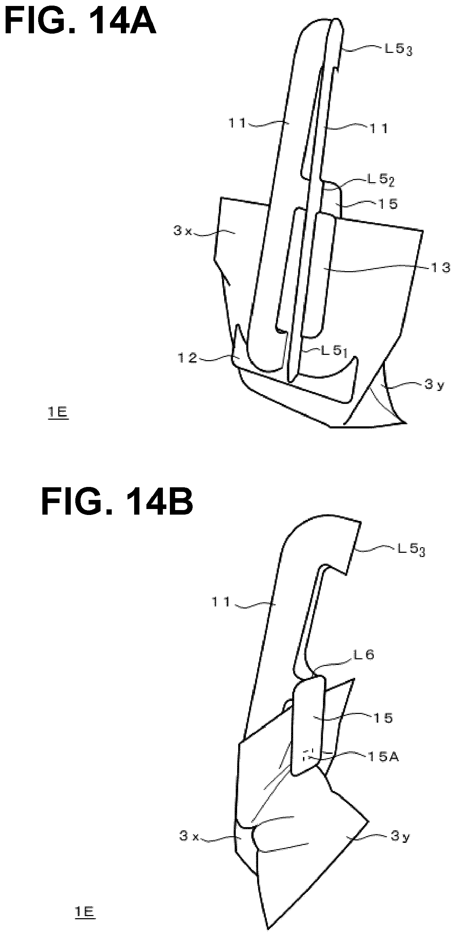

When the extraction bag 1E is used, first the gripping portion 11 is pulled out from the other outer surface, and then, the gripping portion 11 is pulled up from the right and left sides of the bag main body at the folding lines $L5_1$, $L5_2$,

and L5$_3$, to attain the form shown in Figs. 14A and 14B. According to the extraction bag 1E, when the gripping portion 11 is pulled up from the other outer surface 3y, a bonding region 15A of the central pull-up portion 15 with the bag main body 3 is pulled up toward the upper side 3a of the bag main body 3, so that the bag main body 3 changes from a flat shape to a bent shape, which makes it possible to increase the internal volume and to improve the extraction efficiency. When the gripping portions 11 are pulled up from the right and left sides of the central bonded portion 13 at the folding lines L5$_1$, L5$_2$, and L5$_3$, the gripping portion 11 becomes rigid, which makes it easy to move the bag main body 3 up and down in the hot water. In addition, since the water-permeable filter sheet has a specific bending resistance, the extraction efficiency is further improved.

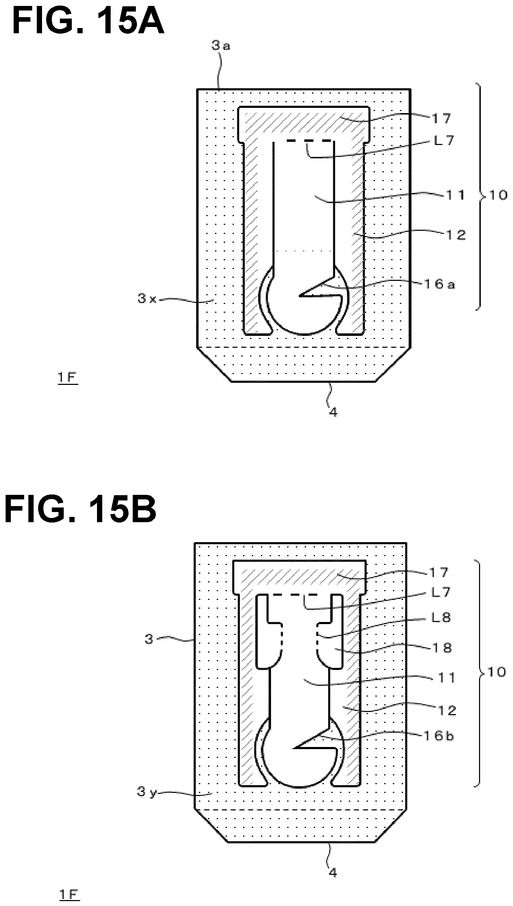

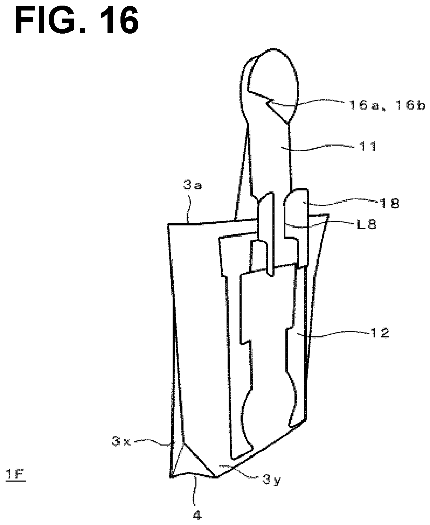

As in the case of an extraction bag 1F shown in Figs. 15A and 15B, an upper side portion 17 where the thin plate-like member 10 is bonded to the bag main body 3 along the upper side 3a of the bag main body 3, and the gripping portion 11 that can be pulled out from the upper side portion 17 at a folding line L7 may be provided on each of the two facing outer surfaces 3x and 3y of the bag main body 3, and the reinforcement portions 12 extending from the upper side portion 17 may be provided on the right and left sides of the respective gripping portions 11. In the extraction bag 1F, as shown in Fig. 16, when the gripping portions 11 on the outer surfaces 3x and 3y of the bag main body are pulled out, and the gripping portions 11 are engaged with each other with notches 16a and 16b of the gripping portions 11, it becomes possible to make the gripping portions 11 rigid, and makes it easy to move the bag main body 3 up and down with respect to the hot water.

The extraction bag 1F also includes a gusset 4 at the bottom part of the bag main body 3, the gusset 4 being formed by inwardly folding the water-permeable filter sheet. Therefore, as shown in Fig. 16, when the gripping portions 11 on the two facing outer surfaces of the bag main body 3 are pulled out to cause the extraction bag 1F to stand up, the folded gusset 4 is expanded, and the internal space of the bag main body increases, so that the extraction efficiency is improved in combination with the water-permeable filter sheet having a specific bending resistance.

At a base part of the gripping portion 11 on one outer surface 3y of the extraction bag, there are provided L-shaped hooking pieces 18 that are connected to the gripping portion 11 at folding lines L8. As shown in Fig. 16, when the hooking pieces 18 are pulled out at the folding lines L8 while the gripping portion 11 is in a pulled-out state, the hooking pieces 18 are hooked onto a cup, so that extraction can proceed while the extraction bag 1F is left in the hot water in the cup.

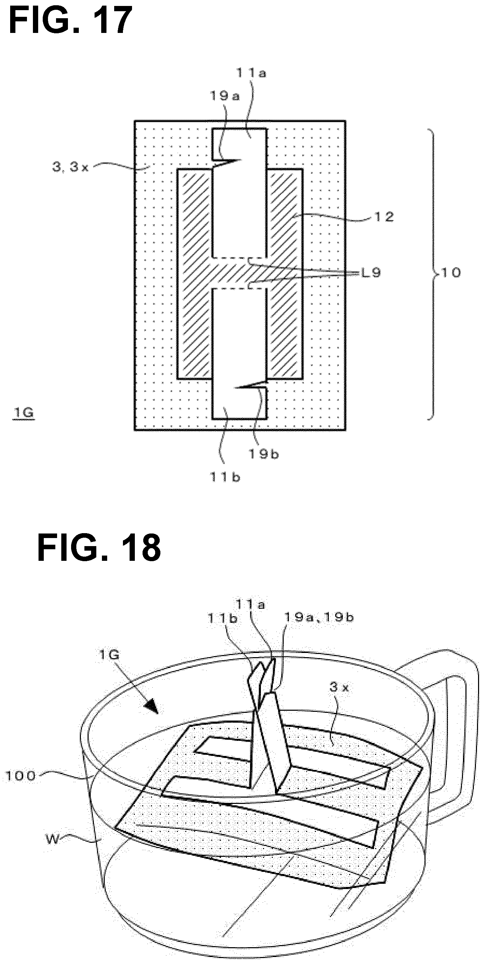

In an extraction bag 1G shown in Fig.17, the thin plate-like member 10 is bonded only to one outer surface 3x, out of two facing outer surfaces of the bag main body 3 that is a flat bag, and a pair of gripping portions 11a and 11b are formed in the thin plate-like member 10. The pair of gripping portions 11a and 11b is able to protrude from the outer surface 3x of the bag main body when being folded upward at folding lines L9. The gripping portions 11a and 11b also have notches 19a and 19b formed so as to be engageable with each other.

When the pair of gripping portions 11a and 11b of the extraction bag 1G is pulled out, the notches 19a and 19b are engaged, and the bag main body 1G is lifted with the outer surfaces of the bag main body 3 being in a horizontal direction, the two facing surfaces of the bag main body 3 are easily separated due to the weight of the extraction material in the bag main body 3, so that the internal space is widened. Fig. 18 is a perspective view showing extraction of the extraction material in the hot water W in the cup 100, while the pair of gripping portions 11a and 11b of the extraction bag 1G is pulled out and the notches 19a and 19b are engaged with each other. As shown in Fig. 18, in the case of the extraction bag 1G, the bag main body 3 expands horizontally in the first state of being floated on the hot water, and the extraction material in the bag main body 3 also expands in the horizontal direction. Furthermore, according to the present invention, since the bending resistance of the water-permeable filter sheet that forms the bag main body 3 is within a specific range, a distance between the front and rear water-permeable filter sheets of the bag main body 3 is not excessively narrowed, and a large volume is easily secured for the bag main body. Therefore, the extract liquid of a desired concentration can be obtained swiftly by gripping the gripping portions 11a and 11b and moving the bag main body 3 up and down with respect to the hot water W. Alternatively, while the bag main body 3 is dipped in the hot water W, the gripping portions 11a and 11b may be released from a hand-supported state and left unattended for a while, and then the gripping portions 11a and 11b are again gripped to lift the bag main body 3 from the hot water surface.

The aforementioned modifications of the present invention may be combined as appropriate.

Examples

Hereinafter, the present invention will be described in more detail on the basis of examples.

Examples 1 to 8 and Comparative Examples 1 to 4 (Preparation of Extraction Bag)

Bag main bodies were formed as flat bags (9 cm long × 6.4 cm wide) that were made of a nonwoven fabric shown in Table 1, and thin plate-like members in the shape shown in Fig. 8A were bonded to the bag main bodies. In each of the bag main bodies, 2 g of black tea leaves or 7 g of medium-ground coffee powder were enclosed to prepare black tea extraction bags or coffee extraction bags.

Abbreviations in Table 1 are as follows.

MB: melt-blown nonwoven fabric
SB: spunbond nonwoven fabric
SB+MB: laminate of melt-blown nonwoven fabric and spunbond nonwoven fabric
PP: polypropylene
PET: polyethylene terephthalate
PLA: polylactic acid

The bending resistance of the nonwoven fabric that forms the bag main body was calculated from the aforementioned expression (1) in accordance with the 41.5° cantilever method (ISO method) in JIS L 1913:2010.

In Table 1, "protrusion length" is the length of a test piece that protrudes from a horizontal surface and measured by a cantilever tester with an inclination of 41.5°, and 1/2 of the "protrusion length" is a bending length C that is used in calculation of the equation (1).

Water-permeable filter sheets before formed into bag main bodies were cut out into strip shapes (19 × 2.5 cm) and used as test pieces. In this case, three test pieces were taken from each water-permeable filter sheet with the long-side direction of the test pieces coinciding with the MD direction of the water-permeable filter sheets, and the protrusion length of each test piece was measured upon counterchanging the front and rear sides of each test piece. Accordingly, the protrusion length of each water-permeable filter sheet was measured six times, and the thus obtained average protrusion length values were shown in Table 1.

Bag main bodies were also prepared so that the MD direction of the water-permeable filter sheets may coincide with the width direction of the bag main bodies.

Extraction operation described below was performed on the prepared black tea extraction bags and coffee extraction bags, and the results of extraction were evaluated.

(Extraction Operation of Black Tea Extraction Bag)

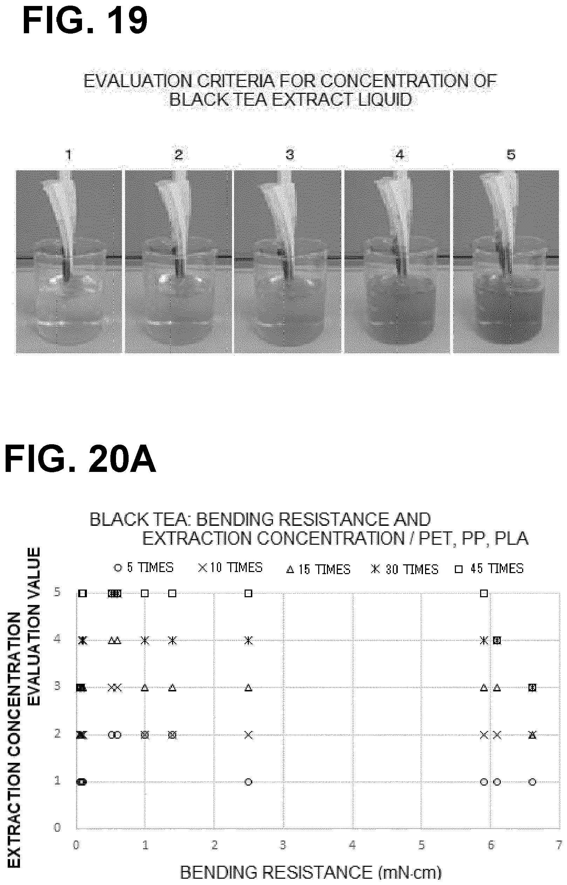

The black tea extraction bags prepared in Examples and Comparative Examples were each dipped in a beaker containing 150 ml of water at 15°C for 2 seconds, with each of their gripping portions being gripped with fingers. The black tea extraction bags were then lifted from the water surface, and then dipped again after 1 second. This dipping and lifting operation was repeatedly performed. The concentration of the extract liquid obtained in the beaker, at the time when the dipping and lifting operation was performed five times, ten times, fifteen times, thirty times or forty five times, was evaluated by visual observation in a five-step scale from one to five in accordance with evaluation criteria shown in Fig. 19 and below.

Evaluation Criteria for Concentration of Black Tea Extract Liquid

1:   Almost no color
2:   Slightly colored
3:   Pale black tea color
4:   Slightly pale black tea color
5:   Black tea color of typical concentration

In this extraction operation, in order to make it easier to grasp the difference in concentration of the extract liquid in the extraction bags in the respective examples and comparison examples, water with a temperature of 15°C was put in the beaker instead of hot water as described above, and the number of times of the dipping and lifting operation was set higher than the number of times of the dipping and lifting operation performed when black tea was brewed for drinking.

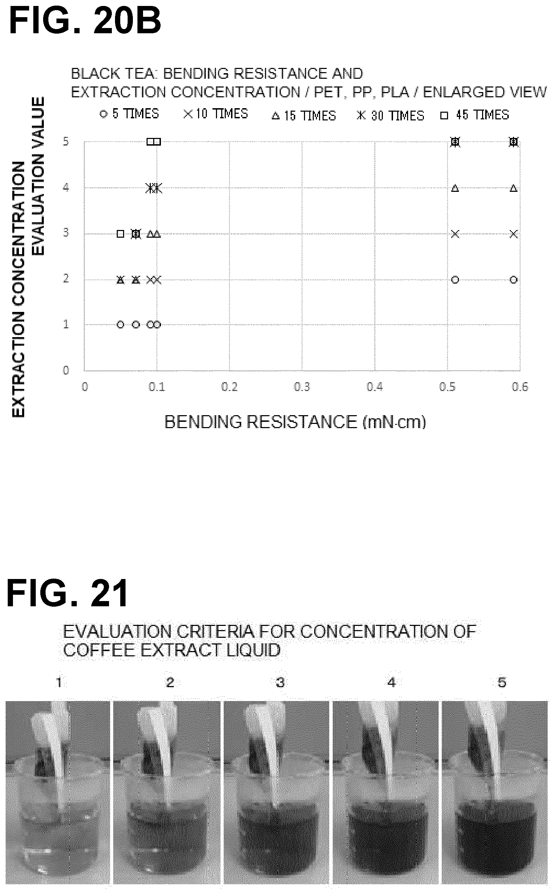

The results are shown in Table 1. The relationship between the bending resistance and the evaluation values of the concentration of the extracted liquid is also shown in Figs. 20A and 20B. Here, Fig. 20B is an enlarged view of a region with a bending resistance of 0.6 mN·cm or less in Fig. 20A.

While the influence of the bending resistance on the evaluation values of the concentration of the extracted liquid is not clear when the number of times of the dipping and lifting operation is five times or ten times, it is clear that the bending resistance influences the evaluation values of the concentration of the extract liquid when the number of times of the dipping and lifting operation is fifteen, thirty or forty five times. Specifically, Fig. 20A indicates that the extraction concentration decreases when the bending resistance exceeds 6.0 mN·cm, and Fig. 20B indicates that the extraction concentration also decreases when the bending resistance is lower than 0.09 mN·cm. In contrast, in the range where the bending resistance is 0.09 to 6.0 mN·cm, the extraction concentration is relatively and stable for each number of times of the dripping and lifting.

(Extraction Operation of Coffee Extraction Bag)

The dipping and lifting operation was repeatedly performed as in the same way as the extraction operation of the black tea extraction bags, and the concentration of the extract liquid obtained in the beaker, at the time when the dipping and lifting operation was performed two times, four times, six times, eight times, or ten times, was evaluated by visual observation in a five-step scale from one to five in accordance with evaluation criteria shown in Fig. 21 and below.
However, since coffee is more difficult to extract than black tea, hot water at a temperature of 98°C was put in the beaker instead of water. In order to make it easier to grasp the difference in concentration of the extract liquid in the extraction bags in the respective examples and comparison examples, the number of times of the dipping and lifting operation was set higher than the number of times of the dipping and lifting operation performed when coffee was brewed for drinking.

Evaluation Criteria for Concentration of Coffee Extract Liquid

1:    Slightly colored
2:    Very pale coffee color
3:    Pale coffee color
4:    Slightly pale coffee color
5:    Coffee color of typical concentration

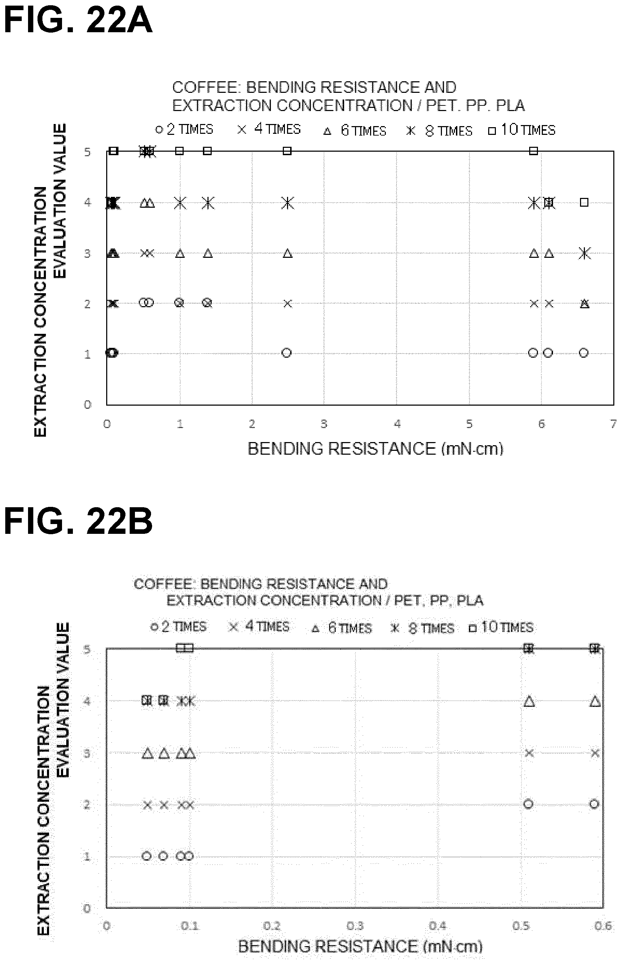

The results are shown in Table 1. The relationship between the bending resistance and the evaluation values of the concentration of the extracted liquid is also shown in Figs. 22A and 22B. Here, Fig. 22B is an enlarged view of a region with a bending resistance of 0.6 mN·cm or less in Fig. 22A.
Fig. 22A indicates that with the number of times of dipping and lifting being six times or more, the extraction concentration decreases when the bending resistance is more than 6.0 mN·cm. In contrast, Fig. 22B indicates that with the number of times of dipping and lifting being ten times, when the bending resistance is 0.09 mN·cm or more, the extraction concentration is higher than when the bending resistance is smaller than 0.09 mN·cm, and with the number of times of dipping and lifting being two, four, six, and eight times, the extraction concentration is further increased when the bending resistance is 0.5 mN·cm or more.

[Table 1]

| | Nonwoven Fabric | Resin | Basis Weight (g/m²) | Fineness (μm) | Protrusion Length (cm) | Bending Resistance (mN·cm) | Black Tea Extraction Bag Evaluation Value for Concentration of Extract Liquid | | | | | Coffee Extraction Bag Evaluation Value for Concentration of Extract Liquid | | | | |
|---|---|---|---|---|---|---|---|---|---|---|---|---|---|---|---|---|
| | | | | | | | Number of Times of Dipping and Lifting Operation | | | | | Number of Times of Dipping and Lifting Operation | | | | |
| | | | | | | | 5 Times | 10 Times | 15 Times | 30 Times | 45 Times | 2 Times | 4 Times | 6 Times | 8 Times | 10 Times |
| Comparative Example 1 | MB | PP | 7.5 | 3 | 3.7 | 0.05 | 1 | 2 | 2 | 3 | 3 | 1 | 2 | 3 | 4 | 4 |
| Comparative Example 2 | MB | PP | 9 | 3 | 4.0 | 0.07 | 1 | 2 | 2 | 3 | 3 | 1 | 2 | 3 | 4 | 4 |
| Example 1 | MB | PP | 10 | 3 | 4.2 | 0.09 | 1 | 2 | 3 | 4 | 5 | 1 | 2 | 3 | 4 | 5 |
| Example 2 | SB | PET | 7.5 | 13 | 4.8 | 0.10 | 1 | 2 | 3 | 4 | 5 | 1 | 2 | 3 | 4 | 5 |
| Example 3 | SB | PET | 12 | 13 | 7.0 | 0.51 | 2 | 3 | 4 | 5 | 5 | 2 | 3 | 4 | 5 | 5 |
| Example 4 | SB+MB | PET | 16.5 | SB 13 MB 6 | 6.6 | 0.59 | 2 | 3 | 4 | 5 | 5 | 2 | 3 | 4 | 5 | 5 |
| Example 5 | SB+MB | PLA | 18 | SB20 MB 8.5 | 7.6 | 1.00 | 2 | 2 | 3 | 4 | 5 | 2 | 2 | 3 | 4 | 5 |
| Example 6 | MB | PP | 30 | 14 | 7.2 | 1.40 | 2 | 2 | 3 | 4 | 5 | 2 | 2 | 3 | 4 | 5 |
| Example 7 | SB | PET | 20 | 13 | 10.0 | 2.50 | 1 | 2 | 3 | 4 | 5 | 1 | 2 | 3 | 4 | 5 |
| Example 8 | SB | PET | 30 | 13 | 11.6 | 5.90 | 1 | 2 | 3 | 4 | 5 | 1 | 2 | 3 | 4 | 5 |
| Comparative Example 3 | MB | PP | 70 | 14 | 8.9 | 6.10 | 1 | 2 | 3 | 4 | 4 | 1 | 2 | 3 | 4 | 4 |
| Comparative Example 4 | SB | PET | 32 | 12 | 11.8 | 6.60 | 1 | 2 | 2 | 3 | 3 | 1 | 2 | 2 | 3 | 4 |

EP 4 332 021 A1

Reference Signs List

1A, 1B, 1C, 1D extraction bag
3 bag main body
3a upper side of bag main body
3x, 3y outer surface of bag main body
4 gusset
10 thin plate-like member
11, 11a, 11b gripping portion
12 reinforcement portion
13 central bonded portion
14 central upper end portion
15 central pull-up portion
15A bonding region of central pull-up portion with bag main body
16a, 16b notch
17 upper side portion
18 hooking piece
19a, 19b notch
20 extraction bag manufacturing sheet
21 water-permeable filter sheet
100 cup
A, A1 bonding region
L1, L2, L3, L4, $L5_1$, $L5_2$, $L5_3$, L6, L7, L8, L9 folding line
S1 longitudinal seal
S2 transverse seal
W hot water

**Claims**

1. An extraction bag comprising: a bag main body that is formed of a water-permeable filter sheet; a thin plate-like member that is provided on an outer surface of the bag main body; and an extraction material that is sealed in the bag main body, the extraction material being subjected to extraction while sealed in the bag main body, wherein:

   the bag main body is a flat bag that has two facing surfaces;
   the thin plate-like member has a gripping portion that protrudes or is able to protrude from an upper side of the bag main body or the outer surface of the bag main body; and
   a bending resistance (41.5° cantilever method in JIS L 1913:2010 (ISO method)) of the water-permeable filter sheet is 0.09 to 6.0 mN·cm.

2. The extraction bag according to claim 1, wherein one end portion of the gripping portion in a long-side direction is bonded to an outer surface of the bag main body, and a folding line extends from the other end portion thereof to the one end portion, so that an inner space of the bag main body increases while the gripping portion is made to protrude from the upper side of the bag main body by folding the folding line.

3. The extraction bag according to claim 1, wherein: the thin plate-like member is bonded to one outer surface of the two facing surfaces of the bag main body; the thin plate-like member has a pair of gripping portions that can be pulled out from the outer surface; and a pair of the gripping portions is engageable with each other.

4. The extraction bag according to any one of claims 1 to 3, wherein the water-permeable filter sheet is a spunbond nonwoven fabric, a melt-blown nonwoven fabric, or a laminate of a spunbond nonwoven fabric and a melt-blown nonwoven fabric.

5. The extraction bag according to any one of claims 1 to 4, wherein a basis weight of the water-permeable filter sheet is 7 to 30 $g/m^2$.

6. The extraction bag according to any one of claims 1 to 5, wherein the extraction material is coffee powder or tea leaves.

FIG. 1A

11

10

L1

A

3a

3, 3x

1A

FIG. 1B

11

3, 3y

1A

# FIG. 2

# FIG. 3A

# FIG. 3B

# FIG. 4A

# FIG. 4B

# FIG. 5

# FIG. 6

**FIG. 7A**

**FIG. 7B**

# FIG. 8A

L3    A1    3a

12

10

11

L1

3, 3x

1C

# FIG. 8B

3a

3, 3y

1C

## FIG. 9A

11

12

3

1C

## FIG. 9B

1C

11

100

3

W

# FIG. 10A

L3  3a

12  A

11  3, 3x

L1

1D

# FIG. 10B

3a

3, 3y

1D

# FIG. 11

# FIG. 12A

# FIG. 12B

# FIG. 13

# FIG. 14A

1E

# FIG. 14B

1E

# FIG. 15A

# FIG. 15B

# FIG. 16

16 a、16 b

11

3 a

18

L 8

12

3 x

3 y

4

1F

# FIG. 17

# FIG. 18

# FIG. 19

EVALUATION CRITERIA FOR CONCENTRATION OF
BLACK TEA EXTRACT LIQUID

# FIG. 20A

BLACK TEA: BENDING RESISTANCE AND
EXTRACTION CONCENTRATION / PET, PP, PLA

# FIG. 20B

BLACK TEA: BENDING RESISTANCE AND
EXTRACTION CONCENTRATION / PET, PP, PLA / ENLARGED VIEW

○ 5 TIMES　×10 TIMES　△ 15 TIMES　✳ 30 TIMES　□ 45 TIMES

EXTRACTION CONCENTRATION EVALUATION VALUE

BENDING RESISTANCE (mN·cm)

# FIG. 21

EVALUATION CRITERIA FOR CONCENTRATION OF
COFFEE EXTRACT LIQUID

# FIG. 22A

COFFEE: BENDING RESISTANCE AND
EXTRACTION CONCENTRATION / PET. PP. PLA

○ 2 TIMES    × 4 TIMES    △ 6 TIMES    ✳ 8 TIMES    □ 10 TIMES

# FIG. 22B

COFFEE: BENDING RESISTANCE AND
EXTRACTION CONCENTRATION / PET, PP, PLA

○ 2 TIMES    × 4 TIMES    △ 6 TIMES    ✳ 8 TIMES    □ 10 TIMES

## INTERNATIONAL SEARCH REPORT

| International application No. |
| --- |
| **PCT/JP2021/017185** |

**A. CLASSIFICATION OF SUBJECT MATTER**

**B65D 85/808**(2006.01)i; **A47J 31/18**(2006.01)i; **B65D 77/00**(2006.01)i
FI: B65D85/808; B65D77/00 F; A47J31/18

According to International Patent Classification (IPC) or to both national classification and IPC

**B. FIELDS SEARCHED**

Minimum documentation searched (classification system followed by classification symbols)

B65D85/808; A47J31/18; B65D77/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 5-51057 A (KIKUCHI, Keiichi) 02 March 1993 (1993-03-02) paragraphs [0006]-[0007], fig. 1-5 | 1-6 |
| A | JP 2012-187278 A (FUSO SANGYO KK) 04 October 2012 (2012-10-04) paragraphs [0014]-[0026], fig. 1-8 | 1-6 |
| A | JP 3-287896 A (KURARAY CO LTD) 18 December 1991 (1991-12-18) p. 3, upper right column, line 4 to p. 6, lower right column, line 13 | 1-6 |
| A | US 2020/0087058 A1 (SPROUT IP APS) 19 March 2020 (2020-03-19) paragraphs [0035]-[0047], fig. 1-13 | 1-6 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 June 2021** | **06 July 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/017185**

| Patent document cited in search report | | | Publication date (day/month/year) | Patent family member(s) | | Publication date (day/month/year) |
|---|---|---|---|---|---|---|
| JP | 5-51057 | A | 02 March 1993 | (Family: none) | | |
| JP | 2012-187278 | A | 04 October 2012 | (Family: none) | | |
| JP | 3-287896 | A | 18 December 1991 | (Family: none) | | |
| US | 2020/0087058 | A1 | 19 March 2020 | US | 2016/0297604 A1 | |
| | | | | EP | 3078609 A1 | |
| | | | | DE | 102015105447 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3140084 U
- JP SHO62220461 A
- JP 2000118561 A